# EUROPEAN PATENT SPECIFICATION

(11) **EP 0 595 380 B1**
(45) Date of publication and mention of the grant of the patent: **05.03.1997**
(21) Application number: 93202684.2
(22) Date of filing: 17.09.1993
(51) Int. Cl.: D03C 1/14, F16C 7/00, F16N 21/00

(54) **Movement transmission lever, particularly for textile machines, having an internal lubricating circuit with centralized supply**
Schwenkhebel, insbesondere für Textilmaschinen, mit innerem Schmierölkreislauf und zentraler Schmiermittelfördereinrichtung
Levier oscillant, en particulier pour machines textiles, présentant un circuit de lubrification interne avec alimentation centralisée

(30) Priority: 24.09.1992 IT MI922200
(43) Date of publication of application: 04.05.1994
(73) Proprietor: BREVTEX SA, CH-6534 San Vittore/GR (CH)
(72) Inventor: Beretta, Giovanni, Imola (Bologna) (IT)
(74) Representative: Raimondi, Alfredo, Dott. Ing. Prof.

(56) References cited:
- EP-A- 0 140 800
- EP-A- 0 251 997
- FR-A- 1 018 736
- GB-A- 1 019 803

## Description

The object of this invention is a movement transmission lever, particularly for healds of weaving frames on textile machines, equipped with an internal hydraulic circuit with centralized supply for the simultaneous lubrication of all the seats of bearings and the like on which the movement transmission components are located.

It is known that for the operation of the healds which move textile machine frames there are used levers having a predetermined geometry and reduced thickness to enable them to be located in groups within the least possible space.

More particularly, such levers are mounted on operating shafts and connected to articulating arms by means of suitable seats in which are located bearings, brasses and like antifriction accessories, for the transmission of rotary movement.

It is also known that such seats and antifriction components must be kept lubricated to prevent them from seizing and in order to increase their speed and dynamic loading.

Lubrication is usually carried out manually with the machine at a standstill, resulting in obvious operating difficulties and consequent loss of time.

In order to make the lubricating operation easier, it is also possible to provide for the supply of lubricant via the oscillating shaft, along which the lubricant could be made to slide toward the various seats of the individual levers, but such solution has the disadvantage that it renders compulsory the use of seals to prevent the lubricant from flowing out in an axial direction instead of entering in a radial direction into the bearing.

An example of a device according to the prior art is disclosed into EP-A- 140 800.

There is therefore posed the technical problem of providing a device for lubricating the housing seats of movement transmission components such as to allow simultaneous lubrication of all the seats, even with the machine in operation, by means of a centralized and controlled supply, and such as to make it possible to avoid the use of external accessories which increase the use of the available space.

The lubricating device according to the invention should also be easy and cheap to manufacture and should be such as to render substantially superfluous the usual preventive maintenance and avoid the need for stopping the machine.

Such results are obtained with the present invention, which provides a lever according to the characterizing part of claim 1.

Further details may be obtained from the following description with reference to the attached drawings, which show:
- In figure 1 :: a plan view of a lever according to the invention;
- In figure 2 :: a cross-section according to plotting plane II-II in fig. 1;
- In figures 3a and 3b :: two examples of implementation of the lubricant supply ducts.

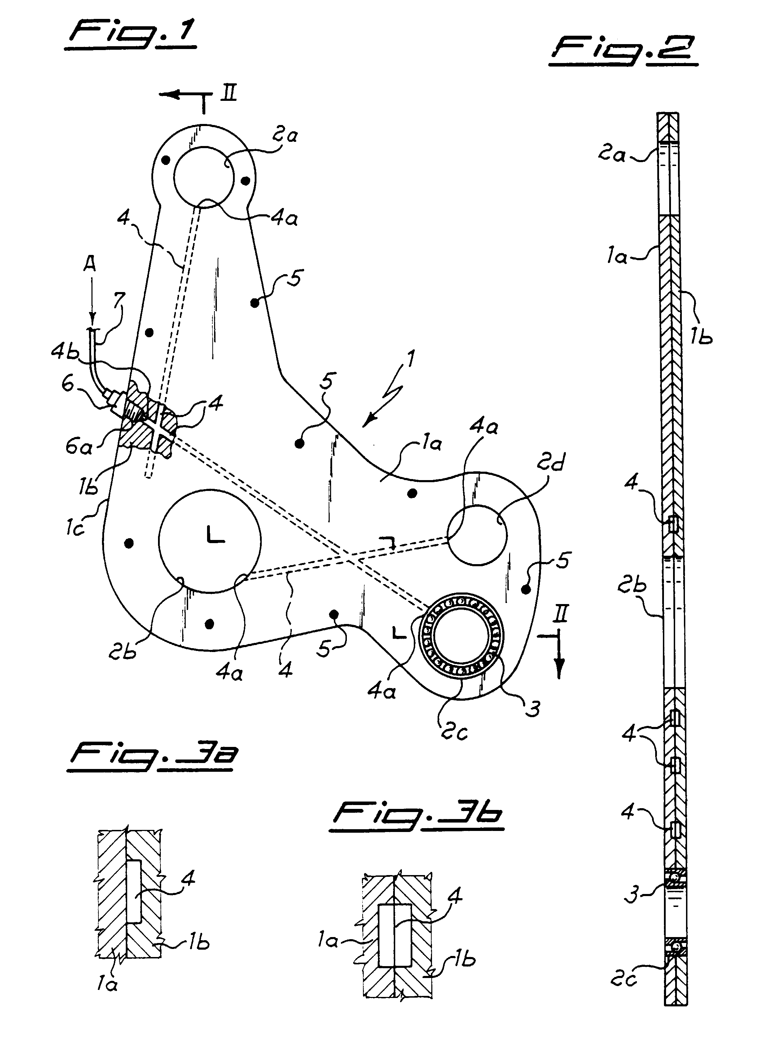

As shown in figure 1, lever 1 for the operation of healds on textile machine frames consists of two specular plates, respectively 1a and 1b, of preset geometry, in which are provided holes 2a, 2b, 2c and 2d forming seats 2 of the respective antifriction components, exemplified in the figures by a bearing 3, to which are keyed the means of transmission of movement which are self-evident and therefore not illustrated.

On the first surface of each plates 1a, 1b forming lever 1 are furthermore provided upwardly open ducts 4, arranged in such a way that they are all in contact with one another and with at least one outlet end 4a, located in relation to each seat 2 which is to be lubricated. According to the invention, provision is also made for at least one duct 4 to have one end 4b located in relation to an outer edge 1c of lever 1 in order to allow the supply of lubricant, as will be more clearly explained hereinafter.

As illustrated in figs. 1 and 2, the two plates 1a and 1b are made integral with one another by spotwelds 5 suitably spaced throughout the perimeter of lever 1 to ensure perfect joining of the inner surfaces and therefore sealing.

Once the two parts are joined there is drilled and tapped at end 4b of duct 4, located in relation to preselected edge 1c, a hole 6a in which to insert coupling 6 which is provided at its outer end with means for the sealed connection of a flexible pipe 7 for supplying the lubricant. The relevant means of centralized and controlled lubrication are self-evident and are therefore only indicated by an arrow "A".

It is therefore obvious that with lever 1 according to the invention it is possible to supply lubricant simultaneously to all the ducts 4 and hence to all the seats 2 fitted with relevant bearings 3.

Many alternatives may be introduced in implementing the constructional details of the lever according to the invention, without thereby departing from the scope of protection of the patent in regard to its general features.

In particular, it is obvious that ducts 4 may be arranged symmetrically in relation to the centre-line of lever 1 on both plates 1a, 1b forming the said lever (fig. 3b), or on only one of the two plates, for example that shown in 1b (fig. 3a).

Likewise it is possible to provide for any arrangement of the spotwelds on the surface of lever 1 or to use different methods of joining, such as rivetting and/or gluing.

It is therefore obvious that with the lever according to the invention it is possible to effect the lubrication of each housing seat of the movement transmission components, in an automatic manner, during normal operation of the textile machine and with programmable centralized control.

## Claims

1. A lever (1) for the transmission of movement to heald frames of textile machines, characterized in that it comprises two plates (1a, 1b), on the first surface of at least one of which is provided a multiplicity of ducts (4), placed in communication with one another and at least one end (4a) of which terminates at each housing seat (2) of the antifriction components (3) for connection to the movement transmission components, and in that at least one end (4b) of one of such ducts is arranged in relation to a free edge (1c) of lever (1), such two plates (1a, 1b) being joined together via their respective first surfaces to form a single unit, there being furthermore provided means (6) of supply of lubricant placed in contact with such end (4b) of a duct located in relation to one edge (1c) of lever (1) and which are to be connected with a centralized lubricant supply (A).

2. A lever (1) according to claim 1, characterized in that ducts (4) are substantially of channel section and upwardly open.

3. A lever (1) according to claim 1, characterized in that ducts (4) are provided on only one of plates (1a, 1b) forming lever (1).

4. A lever (1) according to claim 1 characterized in that ducts (4) are specularly provided on both plates (1a, 1b) forming lever (1).

5. A lever (1) according to claim 1, characterized in that such plates are joined together by spot-welding or rivetting.

6. A lever (1) according to claim 1, characterized in that such plates are joined together by gluing.

7. A lever (1) according to claim 1, characterized in that such plates are joined together by continuous welding.

8. A lever (1) according to claim 1, characterized in that such means of supply of lubricant are substantially comprised of a coupling (6) provided with a screwthread, capable of being inserted into a female thread (6a) provided on edge (1c) of lever (1) in relation to end (4b) of lubricant entry duct (4), such bush also being provided with means of sealed connection for a flexible pipe (7) connected to the centralized lubricant supply.

## Patentansprüche

1. Hebel (1) für die Übertragung von Bewegung auf Weblitzenrahmen von Textilmaschinen, dadurch gekennzeichnet, daß er aufweist zwei Platten (1a, 1b), von denen wenigstens eine eine erste Oberläche hat, auf der vorgesehen ist eine Vielzahl von Leitungen (4), angeordnet in Verbindung miteinander und von denen wenigstens ein Ende (4a) an jedem Aufnahme-Sitz (2) von Antireibungs-Komponenten (3) für die Verbindung mit den Bewegungs-Übertragungskomponenten endet, und daß mindestens ein Ende (4b) einer solchen Leitung angeordnet ist in Beziehung zu einer freien Kante (1c) des Hebels (1), wobei solche zwei Platten (1a, 1b) miteinander verbunden sind über ihre jeweiligen ersten Flächen, um eine einzelne Einheit zu bilden, wobei ferner vorgesehen ist eine Einrichtung (6) zur Versorgung mit Schmiermittel, angeordnet in Kontakt mit einem solchen Ende (4b) einer Leitung, angeordnet in Beziehung zu einer Kante (1c) des Hebels (1), und die zu verbinden sind mit einer zentralisierten Schmiermittelversorgung (A).

2. Hebel (1) nach Anspruch 1, dadurch gekennzeichnet, daß die Leitungen (4) im wesentlichen einen Kanalquerschnitt haben und sich nach oben öffnen.

3. Hebel (1) nach Anspruch 1, dadurch gekennzeichnet, daß die Leitungen (4) auf nur einer der Platten (1a,1b) vorgesehen sind, welche den Hebel (1) bilden.

4. Hebel (1) nach Anspruch 1, dadurch gekennzeichnet, daß die Leitungen (4) spiegelnd vorgesehen sind auf beiden Platten (1a, 1b), welche den Hebel (1) bilden.

5. Hebel (1) nach Anspruch 1, dadurch gekennzeichnet, daß solche Platten durch Punktschweißen oder Nieten verbunden sind.

6. Hebel (1) nach Anspruch 1, dadurch gekennzeichnet, daß solche Platten verbunden sind durch Kleben.

7. Hebel (1) nach Anspruch 1, dadurch gekennzeichnet, daß solche Platten verbunden sind durch kontinuierliches Schweißen.

8. Hebel (1) nach Anspruch 1, dadurch gekennzeichnet, daß eine solche Einrichtung zur Versorgung mit Schmiermittel im wesentlichen gebildet ist aus einer Kopplung (6), versehen mit einem Schraubengewinde, das geeignet ist, eingesetzt zu werden in ein Gegengewinde (6a), das vorgesehen ist auf einer Kante (1c) des Hebels (1) in Beziehung zum Ende (4b) der Schmiermittel-Einführungsleitung (4), wobei eine solche Buchse auch versehen ist mit einer Einrichtung zur abgedichteten Verbindung für einen Schlauch (7), der verbunden ist mit einer zentralen Schmiermittel-Versorgung.

## Revendications

1. Un levier (1) pour la transmission de mouvement à des cadres à lisses de machines textiles, caractérisé en ce qu'il comprend deux plaques (1a, 1b), sur la première surface d'au moins l'une desquelles est prévue une multiplicité de conduits (4), disposés en communication l'un avec l'autre et dont au moins une extrémité (4a) se termine au niveau de chaque siège de logement (2) des éléments anti-friction (3) pour une liaison aux éléments de transmission de mouvement, et en ce qu'au moins une extrémité (4b) d'un de ces conduits est montée en relation d'un bord libre (1c) du levier (1), de telle manière que deux plaques (1a, 1b), étant réunies entre elles par l'intermédiaire de leur première surface respective pour former un seul ensemble, il est en outre prévu des moyens (6) d'amenée de lubrifiant qui sont placés en contact avec une telle extrémité (4b) d'un conduit disposée en relation d'un bord (1c) du levier (1) et qui doivent être reliés à une alimentation de lubrifiant centralisé (A).

2. Un levier (1) selon la revendication 1, caractérisé en ce que les conduits (4) sont sensiblement de section en U et ouverts vers le haut.

3. Un levier (1) selon la revendication 1, caractérisé en ce que les conduits (4) sont prévus seulement sur une des plaques (1a, 1b) formant le levier (1).

4. Un levier (1) selon la revendication 1, caractérisé en ce que les conduits (4) sont prévus de manière spéculaire sur les deux plaques (1a, 1b) formant le levier (1).

5. Un levier (1) selon la revendication 1, caractérisé en ce que de telles plaques sont réunies entre elles par soudage par points ou rivetage.

6. Un levier (1) selon la revendication 1, caractérisé en ce que de telles plaques sont réunies entre elles par collage.

7. Un levier (1) selon la revendication 1, caractérisé en ce que de telles plaques sont réunies entre elles par soudage continu.

8. Un levier (1) selon la revendication 1, caractérisé en ce que de tels moyens d'amenée de lubrifiant se composent essentiellement d'un couplage (6) présentant un filet de vis, susceptible d'être inséré dans un taraudage (6a) prévu sur le bord (1c) du levier (1) en relation de l'extrémité (4b) du conduit (4) d'entrée du lubrifiant, un tel coussinet présentant également des moyens de liaison étanche pour un tuyau souple (7) relié à l'alimentation de lubrifiant centralisée.
